# EUROPEAN PATENT SPECIFICATION

(11) **EP 4 164 401 B1**
(45) Date of publication and mention of the grant of the patent: **03.07.2024**
(21) Application number: 21725528.0
(22) Date of filing: 17.05.2021
(51) Int. Cl.: A23F 5/04, A23N 12/08, A23N 12/12

(54) **APPARATUS FOR ROASTING COFFEE BEANS**
VORRICHTUNG ZUM RÖSTEN VON KAFFEEBOHNEN
APPAREIL DE TORRÉFACTION DE GRAINS DE CAFÉ

(30) Priority: 10.06.2020 EP 20179335
(43) Date of publication of application: 19.04.2023
(73) Proprietor: Société des Produits Nestlé S.A., 1800 Vevey (CH)
(72) Inventor: SAVIOZ, Grégory, 1966 Saxonne (CH); GEBS, Jonathan, 1290 Versoix (CH); SCORRANO, Lucio, 1400 Yverdon-les-Bains (CH)
(74) Representative: Pasquino, Fabio
(86) International application number: PCT/EP2021/062916
(87) International publication number: WO 2021/249722

(56) References cited:
- WO-A1-2018/053436
- CN-A- 102 551 179
- JP-U- H0 730 096
- US-A- 5 307 733
- US-A1- 2019 328 026

## Description

### 1. Field of the invention

The present invention relates to an apparatus for roasting coffee beans.

### 2. Technical background

Roasting coffee beans transforms unroasted coffee beans into roasted coffee beans. The unroasted coffee beans are typically green and/or dried coffee beans, and the roasted coffee beans particularly contribute to the flavor of the coffee beverage, which is prepared from the (grinded) roasted coffee beans. Roasting the coffee beans can be on a large scale, but also on a small scale. In small scale roasting of coffee beans, the business to the business (a shop, a coffee shop, etc.) or business to consumer or customer, e.g. the consumer of the coffee beverage, roasts the coffee beans. Roasting coffee beans by the consumer is very interesting, since the consumer can roast the coffee beans at home in order to experiment with different flavor profiles and in order to ensure a particularly fresh roast of the coffee beans, for example as a hobby.

For roasting the coffee beans, the temperature needs to be measured (sensed) by a temperature sensor. According to one solution, the temperature sensor is in direct contact with the coffee beans in order to measure a temperature, which is close to the real temperature of the coffee beans. The temperature sensor is thus provided inside of the chamber for roasting, such as above the coffee beans (coffee bed). In this solution, the temperature sensor is, however, subjected to smoke and dirt (in particular by-products of the roasting process, e.g. coffee chaffs). This can lead to a drift of the measured temperature, if the temperature sensor is not cleaned. Further, this solution requires to encapsulate the temperature sensor in order to withstand wear and user manipulations, which makes the temperature sensor less reactive.

According to another solution, the temperature sensor is arranged upstream of the roasting chamber, for example between a heating element and the roasting chamber. Thus, reactivity is improved and a better control of the temperature is achieved. However, the temperature sensor does not inform about the real temperature of the coffee beans, since the temperature measured before the chamber is due to the downstream transfer of heat to the coffee beans, i.e. to the coffee bed, higher than the real temperature of the coffee beans. In other words, the coffee bed acts as a low-pass filter for the heat. Moreover, the position of the sensor highly influences the measured temperature, which complicates the repeatability. Coffee bean roasters with temperature measuring means are for example known from CN 102 551 179 A and JP H07 30096 U.

Therefore, it is an object of the present invention to provide an apparatus, which overcomes the afore-mentioned drawbacks. That is, it is in particular an object of the present invention to provide an apparatus, which more reliably and more easily (with lower costs, etc.) measures a temperature of the coffee beans roasted by the apparatus.

These and other objects, which become apparent upon reading the following description, are solved by the subject matter of the independent claim. The dependent claims refer to preferred embodiments of the invention.

### 3. Summary of the invention

According to the invention, an apparatus for roasting coffee beans is provided. The apparatus comprises: a chamber in which coffee beans can be received for roasting, and a device for roasting the coffee beans received in the chamber. The chamber is delimited by at least a bottom and a sidewall extending from the bottom, wherein the sidewall comprises an outer side oriented to face away from the (inside of the) chamber. A temperature sensor is provided (i.e. arranged) at the outer side of the sidewall for sensing (i.e. measuring) a temperature inside of the chamber.

The temperature sensor thus measures the temperature of the inside of the chamber, and thus of the coffee beans received in the chamber, indirectly, namely by way of the sidewall. In other words, the sidewall, as a part of the body of the chamber, may function as a kind of low-pass filter and monitor the real temperature of the coffee beans. Due to the arrangement of the temperature sensor on the sidewall, the temperature sensor is arranged near, i.e. very close to, the coffee beans, since the coffee beans are, when received in the chamber, usually in direct contact with the (inner side of the) sidewall. As such, the temperature sensor can measure the real temperature of the coffee beans received in the chamber with an increased reliability. And since the temperature sensor is provided at (i.e. on and/or against) the outer side of the sidewall, the temperature sensor is not arranged to be in direct contact with the coffee beans and other by-products (coffee chaffs, dirt, etc.), which are produced during the roasting of the coffee beans, and the temperature sensor is not exposed or less exposed to wear. Therefore, the temperature sensor does not need a complex protection (encapsulating, housing, etc.) in order to prevent the temperature sensor from drifting with respect to the measurement of the temperature due to the deposition of dirt on the sensor. For example, the temperature sensor can thus be a low-cost temperature sensor.

The chamber has a height up to which the chamber can receive the coffee beans in the chamber, wherein the temperature sensor is arranged at or below this height. In other words, when the coffee beans are received in the chamber, the temperature sensor is arranged such that the sidewall is between the coffee beans and the temperature sensor. The temperature sensor is thus provided opposite to, or just (slightly) higher than, the coffee beans (coffee bed). The temperature sensor is therefore in a position in order to reliably measure the temperature of the inside of the chamber and, thus, of the coffee beans received in the chamber.

The outer side of the sidewall may comprise a recess, wherein temperature sensor is at least in part and preferably fully arranged in the recess. The recess facilitates that the temperature sensor can be brought in closer proximity to the inside of the chamber and, thus, to the coffee beans, thereby in particular increasing the reliability of measuring the temperature of the inside of the chamber. Further, the recess also securely accommodates the temperature sensor, thereby providing also an improved protection for the temperature sensor.

The recess may be arranged to form a protrusion on an inner side of the sidewall, wherein the inner side is oriented to face to the inside of the chamber. Thus, forming the recess in the outside of the sidewall effects that at the same time the protrusion is formed on the inner side of the sidewall, such as by manufacturing the recess in a dedicated forming step. The protrusion on the inner side of the sidewall may be used as an obstruction or deflection (i.e. baffle) element, for the coffee beans moving in the inside of the chamber and along the inner side of the sidewall, thereby adding an agitation or turbulence effect to the coffee beans by the obstruction or deflection provided with the protrusion. Thus, the protrusion may be arranged to come into direct contact with the coffee beans received in the chamber, thereby disturbing the (rotational) movement of the agitating coffee beans for increased turbulence. Further, the protrusion also increases the surface on the inner side of the sidewall, i.e. within the chamber, thus allowing for an increased responsiveness of the temperature sensor.

The recess may be formed by an embossing in the sidewall. Therefore, by embossing the sidewall, the recess, and preferably at the same time also the protrusion, can be very efficiently provided.

The temperature sensor may be arranged to transmit a first signal related to the sensed (i.e. measured) temperature for displaying the sensed temperature, such as for displaying the sensed temperature on a user interface or display unit. Additionally or alternatively, the temperature sensor may be arranged to transmit the first signal for displaying the sensed temperature on a (remote) user device (such as on an app, e.g. running on a smartphone), which is wirelessly connected to the apparatus or temperature sensor. The wireless connection may be provided by short haul communication such as Bluetooth, NFC, WiFi. The user of the apparatus can therefore receive a reliable feedback with respect to the temperature of the inside of the chamber, i.e. of the coffee beans, in particular without requiring the transmission of the signal of another temperature sensor, such as of a temperature sensor used for controlling the device for roasting.

Additionally or alternatively, the temperature sensor may be arranged to transmit a first signal related the sensed temperature for determining the presence of the chamber based on the sensed temperature. In other words, the temperature sensor may be at the same time used as a presence sensor. Thus, a further sensor for sensing the presence of the chamber can be omitted, thereby simplifying and downsizing the apparatus. The presence may be sensed by sensing a (temperature) resistance, which is due to the sidewall and, thus, the chamber.

The apparatus may comprise a control unit configured to control the device for roasting of the coffee beans. In an optional configuration of the control unit, the control unit may control the device for roasting of the coffee beans based on the received first signal from the temperature sensor. Additionally or alternatively, the control unit may be configured to control the device for roasting of the coffee beans based on a second signal related to a roasting temperature sensed by a further temperature sensor of the apparatus. The further temperature sensor may be arranged in the current of air generated by the device for roasting, such as before the chamber and/or between the device and the chamber. The further temperature sensor may thus have, compared to the (first) temperature sensor, an increased responsiveness with respect to the real temperature of the coffee beans, thereby facilitating a more precise control of the roasting process in the chamber. For example, the control unit may be configured to control the device for roasting of the coffee beans only based on the second signal of the further temperature sensor. As such, the (first) temperature sensor does not need to be designed for a precise control of the device for roasting the coffee beans in the chamber, thereby making the (first) temperature sensor less complex (lower costs, etc.).

The control unit may be configured to determine the presence of the chamber based on the received first signal, wherein the control unit is then configured to avoid roasting of the coffee beans by the device upon receipt of no first signal or when the first signal exceeds or falls below a defined threshold value or range. The reception of no first signal may be when the temperature sensor is not functionally (electrically) connected to the control unit, e.g. because the chamber and, thus, the temperature sensor are detached from the apparatus. The defined threshold value or range may be or include the ambient temperature (such as about 20°C).

The apparatus, preferably the control unit, may be configured to apply a correction factor to the temperature sensed by the temperature sensor. The correction factor therefore considers effects, which may effect that the sensed temperature deviates from the real temperature of the inside of the chamber respectively coffee beans provided therein. These effects may include, for example, the thermal inertia of the sidewall. The correction factor may depend on the geometry and/or material characteristics of the sidewall. The geometry and/or material of the sidewall may have a particular influence on the thermal inertia of the sidewall so that by taking into account these features of the sidewall a particularly good correction factor in order to calculate the real (i.e. corrected) temperature is provided.

The apparatus may comprise a user interface and/or a display unit, which is/are preferably configured to display the sensed temperature based on the transmitted or received first and/or second signal. Additionally or alternatively, the apparatus may comprise a communication interface for wireless communication with a user device such as a smartphone. The communication interface may be adapted to communication with the user device with short haul communication such as Bluetooth, NFC, WiFi.

The apparatus may comprise a receptacle, wherein the receptacle comprises the chamber. The receptacle is preferably detachably attached to the apparatus. Thus, the receptacle facilitates to easily detach the chamber from the apparatus, e.g. in order to remove the roasted coffee beans from the chamber (such as by gravity) and/or in order to clean the chamber.

The receptacle may comprise a handle, wherein the handle is arranged such that at least in a plan (i.e. top) view of the receptacle the handle covers the temperature sensor. As such, the handle in particular provides protection for the temperature sensor from above. Besides the function of handling the receptacle by the handle, the handle thus also provides a protection of the temperature sensor. The protection of the temperature sensor is thus increased in a very simple manner, not requiring additional protection elements.

The temperature sensor is preferably fixedly arranged with respect to the chamber (e.g. fixedly attached to the outer side) so that the temperature sensor moves together with the chamber when the chamber is moved (with respect to the device), such as when the receptacle is detached. This has the advantage that the temperature sensor is always in good thermal contact with the chamber so that there is no risk of erroneously arranging the temperature sensor with respect to the chamber. Alternatively, the temperature sensor may be arranged to remain stationary, i.e. fixed with respect to the device (and, thus, not fixedly arranged with respect to the chamber or outer side), when the chamber is moved, such as when the receptacle is detached. In other words, when the chamber is attached with respect to the device, the temperature sensor may come into contact with the outer side of the sidewall, in particular with the recess. This has the advantage that there is no risk of damaging the temperature sensor when the chamber or receptacle is removed.

The device may be further provided with a device for generating a current of air inside of the chamber in order to agitate the coffee beans received by the chamber. The agitation of the coffee beans is particularly advantageous for a well roasting of the coffee beans. As mentioned above, the protrusion on the inner side of the sidewall may easily increase this agitation by functioning as an obstruction or deflection element arranged in the current of air generated by the device. The device may be configured to generate the current of air such that, due to the introduction of the current of air into the chamber, a fluidized bed is effect. The fluidized bed then comprises the coffee beans, thereby agitating the coffee beans. The apparatus may thus be a fluid bed coffee roaster. In other words, the device may be adapted for fluid bed technology.

The device may be arranged to generate a heated current of air to roast the coffee beans received in the chamber. Preferably, the device comprises a heating unit for heating up the current of air. For example, fresh air is drawn, subsequently heated by the heating unit and finally flows as a heated current of air into the inside of the chamber in order to roast the coffee beans received in the chamber.

The apparatus maybe a home appliance apparatus (i.e. a home appliance device). The apparatus may thus have a design for being used in a kitchen of a household, e.g. arranged next to and/or integrated with a coffee grinder and/or a beverage preparation machine. For example, the apparatus is an in-home solution, which particularly allows a fresh and/or personalized roast of coffee beans. With the apparatus, a home (coffee) roasting solution may thus be provided.

### 4. Description of a preferred embodiment

In the following, the invention is described exemplarily with reference to the enclosed figures, in which
Figure 1 shows a schematic perspective exploded view of an apparatus according to a preferred embodiment of the invention;
Figure 2 shows a further schematic perspective exploded view of the apparatus shown in figure 1;
Figure 3A shows a schematic perspective exploded view of the apparatus shown in figures 1 and 2, in which in particular the connector of the temperature sensor is visible;
Figure 3B is a detailed schematic perspective exploded view of the connector shown in figure 3A;
Figure 4 is a schematic perspective view of the chamber of the apparatus shown in figures 1-3, wherein an optionally provided receptacle comprises the chamber; and
Figure 5 is a further schematic perspective view of the chamber shown in figure 4.

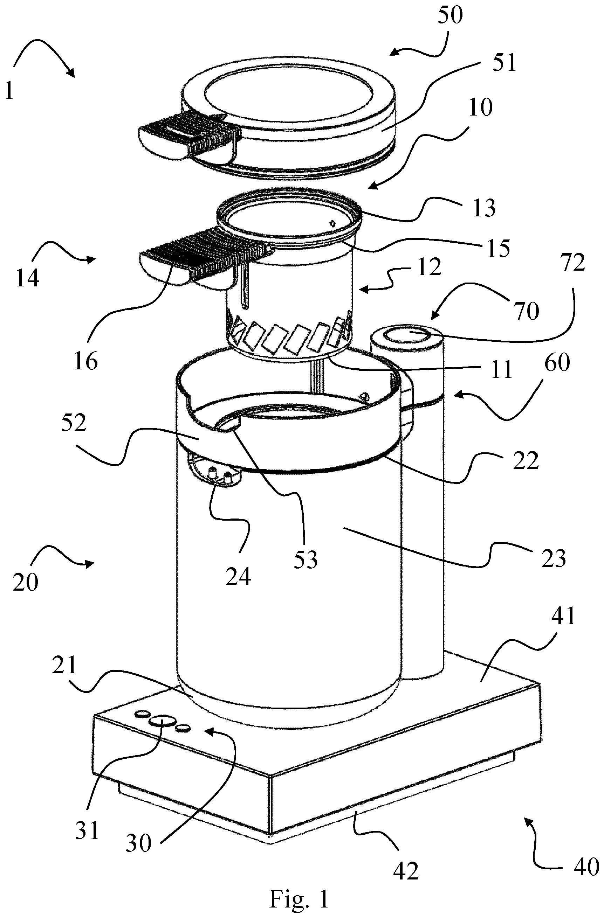

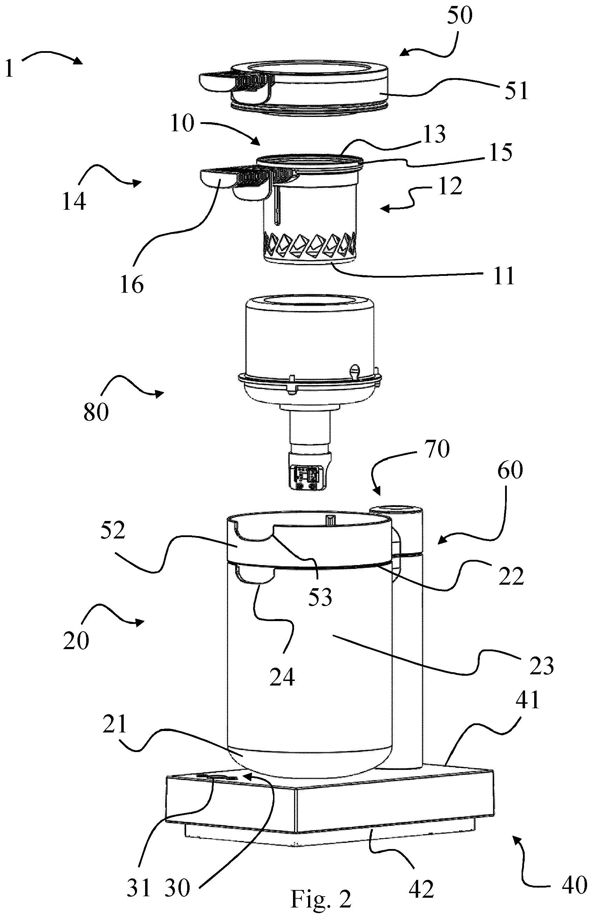

In figures 1 and 2, a preferred embodiment of an apparatus 1 is exemplarily shown. The apparatus 1 is adapted for roasting coffee beans. More specifically, the apparatus 1 is adapted to transform unroasted coffee beans, for example in the form of green and/or dried coffee beans, into roasted coffee beans. More specifically, the roasting of the coffee beans transforms the chemical and physical properties of the unroasted coffee beans in order to produce the characteristic flavor of the roasted coffee beans and, thus, of the coffee beverage, which is prepared from the so roasted coffee beans. That is, the roasting of the coffee beans effects the specific taste of roasted coffee beans, for example, by a Maillard reaction and other chemical reactions. The process of roasting the coffee beans therefore precedes other processes required for preparing the coffee beverage, such as coffee grinding and/or coffee brewing, e.g. coffee extraction.

The apparatus 1 is adapted for collecting chaffs of the so roasted coffee beans. That is, the unroasted coffee beans typically have a (green and/or dried) skin, in particular when it is first picked off the coffee tree. The chaff may also be referred to as husk of the coffee bean. During roasting of the coffee beans, this skin comes off the coffee beans and thus remains as chaffs. That is, in particular the high temperature of roasting allows the chaffs to be easily removed from the coffee beans, without the need of additional work. Since it is desired that this chaffs of the so roasted coffee beans does not remain with the roasted coffee beans, because, for example, the consumer does not wish to have the chaffs inside of the grinder and/or beverage preparation machine and, thus, inside of the coffee beverage, the chaffs may be collected by the apparatus 1 such that the chaffs will not remain with the finished product, which is the roasted coffee beans.

The apparatus 1, which exemplarily shown in figures 1 and 2, is adapted for small-scale coffee roasting (i.e. on-site coffee roasting) and is thus in particular not a large-scale (industrial) roasting apparatus or machine. The apparatus 1 is thus particularly suitable for being used on the side of the business to business (e.g. a coffee shop) and/or of the business to consumer, which is typically the consumer of the coffee beverage. Therefore, the apparatus 1 is preferably a home appliance apparatus. As such, the apparatus 1 may be used in a household or kitchen, in particular on a tabletop, e.g. next to or (functionally) integrated with a coffee grinder and/or a beverage preparation machine. The apparatus 1 therefore preferably has a size and weight for being transportable by a single person, in particular without the need of a dedicated transport mechanism.

The apparatus 1 comprises a chamber 10, in which coffee beans can be received for roasting. The chamber 10 is preferably detachably arranged. The chamber 10 is designed as a tank or container. The chamber 10 is delimited by a bottom 11 and a sidewall 12, which extends from the bottom 11. Therefore, when the coffee beans are received in the chamber 10, the coffee beans are preferably supported on the bottom 11 and are at least in part in contact with the sidewall 12. The chamber 10 has a design so that in particular heat and/or heated air can come in contact with the (unroasted) coffee beans in order to roast the coffee beans; for example, the bottom 11 and/or the sidewall 12 is made of a material with a relatively high heat conductivity, e.g. a material comprising or consisting of metal. The bottom 11 and/or the sidewall 12 may comprise one or more holes (i.e. vents), which facilitate that heat and/or a current of air (for heating and/or for cooling) can flow into the chamber 10 to accordingly process the coffee beans. The sidewall 12 preferably comprises vents for the ventilation of the inside of the chamber 10. The vents may be evenly distributed along the sidewall 12. As shown in figures, each of the vents has the form of a rectangle. However, each of the vents is not limited to a specific, but can be of any shape. The vents are provided on a lower portion of the sidewall 12, such as next to the bottom 11.

The chamber 10 comprises an opening 13 for accessing the chamber 10. As such, via the opening 13, coffee beans can be at least removed from the chamber 10. The opening 13 preferably also facilitates that coffee beans can be inserted into the chamber 10, i.e. the chamber 10 may be filled with coffee beans by way of the opening 13. The opening 13 preferably defines an accessing direction for at least removing coffee beans from the chamber 10 and preferably also for inserting coffee beans into the chamber 10. This accessing direction may extent in a vertical direction, as shown in the figures. As such, the user of the apparatus 1 accesses the chamber 10 from above the apparatus 1. The opening 13 is not limited to a specific form. The opening 13 is preferably defined by the sidewall 12, e.g. by the distal end of the sidewall 12. Thus, the opening 13 is arranged opposite to the bottom 11. For example, the opening 13 may extent in a plane. The opening 13 has a form corresponding to the bottom 11 and/or has a round (circular, elliptical, etc.) form, however may also have different forms, e.g. a polygonal, rectangular, or square form.

The apparatus 1 comprises a receptacle 14, which comprises the chamber 10. As shown in figures 1 and 2, the receptacle 14 is detachably attached to the apparatus 1, e.g. by way of a form and/or a frictional fit. For example, the receptacle 14 is detachably attached to the apparatus 1 such that in an attached position, the receptacle 14 has a defined position with respect to the apparatus 1. In other words, the detachably designed attachment of the receptacle 14 preferably effects that, by attaching the receptacle 14 to the apparatus 1, the receptacle 14 is automatically in a position, in which the coffee beans received by the chamber 10 can be accordingly processed, i.e. roasted, by the apparatus 1. The receptacle 14 comprises a flange 15 for positioning the receptacle 14 with respect to the apparatus 1. For example, the flange 15 is positioned and supported on a dedicated part of the apparatus 1 in order to accordingly position the receptacle 14 with respect to the apparatus 1. The flange 15 extents from the sidewall 12 and/or the opening 13.

The receptacle 14 may comprise a handle 16 for manually handling the receptacle 14, e.g. in order to detach the receptacle 14 from the apparatus 1 and/or to attach the receptacle to the apparatus 1. The handle 16 preferably has a design such that the handle 16 can be grasped by a human hand. For example, the handle 16 extends away from the receptacle 14. As such, the handle 16 extents to be (at least in part) inclined or parallel with respect to the opening 13, e.g. with respect to the plane, in which the opening 13 extends. In other words, the handle 16 (at least in part) extents to be inclined or perpendicular with respect to the accessing direction, which is defined by the opening 13. Preferably, the handle 16 extends from the flange 15. For secure handling of the receptacle 14 by the handle 16, the handle 16 preferably comprises or consists of a material with low heat conductivity, such as plastic. Thus, the material of the handle may have a lower heat conductivity than of the material of other parts of the receptacle 14, such as of the bottom 11 and/or the sidewall 12 and/or the flange 15, which are preferably made of a material with high heat conductivity, such as metal.

The apparatus 1 further comprises a housing 20 for housing at least the chamber 10. For example, the housing 20 has a base 21 and a top 22, wherein the chamber 10 is arranged such that the opening 13 is arranged at the top 22 of the housing 20. As such, the opening 12 is preferably flush with the top 22. The housing 20 may also comprise a sidewall 23, which extends from the bottom 21 to the top 22 and preferably circumferentially surrounds the chamber 10. If the receptacle 14 is present, the housing 20 is designed to receive the receptacle 14, such that the receptacle 14 is in a defined position, when the receptacle 14 is attached to the housing 20 and thus to the apparatus 1. For example, the housing 20, in particular its top 22, comprises a receiving part or section 24, on which the receptacle 14, e.g. its flange 15 and/or handle 16, can be supported for attaching the receptacle 14 to the apparatus 1. The receiving part 24 is therefore - at least in part - designed correspondingly (or complementarily) to the flange 15 and/or handle 16, and/or the receiving part 24 may be designed to cooperate with the receptacle 14 and/or flange 15 and/or handle 16 in order to accordingly attach and position the receptacle 14 to the apparatus 1. The receiving part 24 is formed as a recess in the housing 20. The housing 20 is not limited to a specific form. The housing 20 may have a non-symmetrical or symmetrical form. For example, the housing 20 has substantially the form of a cylinder or a (truncated) cone.

As shown in figure 2, the apparatus 1 further comprises a device 80 (e.g. comprising a fan) for generating a current of air inside of the chamber 10. This current of air may be used for roasting the coffee beans, which are received in the chamber 10. For example, the apparatus 1 or the device 80 may further comprise a heater (heating unit), which heats up (fresh) air, wherein the device transports this heated up air into the chamber 10. The current of (hot) air therefore comes into contact with the coffee beans and thus roasts the coffee beans. The current of air may be also such that the coffee beans inside of the chamber 10 are agitated or moved, in particular in order to improve the roasting of the coffee beans. Additionally or alternatively, the current of air generated by the device may be used for cooling the (already roasted) coffee beans received in the chamber 10. For example, for cooling the coffee beans, the current of air may be not heated up (by the heater), but only transport (fresh) air such as ambient air. Thus, for providing the current of air for cooling, the device may simply remain in an activated state, whereas the heater is simply put in a deactivated state, i.e. turned off.

The apparatus 1 also comprises a control unit, in order to accordingly control the roasting of the coffee beans, e.g. according to a preprogrammed program, e.g. including a predefined roasting and/or temperature profile. The control unit is functionally connected to the device and/or the heater so that the device and/or heater accordingly roast and/or cool the coffee beans received by the chamber 10.

As shown in figures 1 and 2, the apparatus 1 comprises a user interface 30, which is preferably functionally connected to the control unit. The user interface 30 facilitates that the user of the apparatus 1 can accordingly control the apparatus 1, in particular for roasting the coffee beans and/or for terminating roasting of the coffee beans. The user interface 30 comprises one or more (e.g. only three) control elements 31, e.g. in the form of one or more buttons or other touch sensitive elements (touchscreen, etc.), for controlling the apparatus 1. For example, the one or more control elements 31 comprise an element for starting the roasting process and for stopping or terminating the roasting process. The control elements 31 also comprises a control element for powering up (and turning off) the apparatus 1 (e.g. an on/off control element) and/or a control element for adjusting a roasting level of the coffee beans to be roasted in the chamber 10. The user interface 30 may comprise only one control element for starting and stopping and for powering up (and turning off) the apparatus 1. Stopping of the roasting process may be also automatically carried out by the control unit, e.g. after a predetermined (roasting) time has lapsed. The user interface 30 is preferably arranged on a front side of the apparatus 1, i.e. a user side of the apparatus 1.

The device, the control unit, and/or the user interface 30 may be provided in or on the housing 20 and/or a further housing part 40. The further housing part 40 is provided such that the housing 20, e.g. its bottom 21, is arranged on a top 41 of the further housing part 40. Preferably, the further housing part 40 forms the bottom or support of the apparatus 1. Thus, the further housing part 40 is designed such that the apparatus 1 can be placed on a surface such as a tabletop. Therefore, the further housing part 40 preferably comprises a bottom 42, which is opposite to the top 41, wherein the bottom 42 is adapted to be placed on a surface such as a tabletop. The device, the control unit and/or user interface 30 may be also provided in the housing 20, so that, for example, the further housing part 40 is not necessary. Therefore, the housing 20, e.g. its bottom 21, also forms the bottom of the apparatus 1.

The apparatus 1 further comprises a power inlet, e.g. in the form of a power plug. By way of the power inlet, the parts of the apparatus 1 requiring energy, such as electrical energy (voltage and/or current), in particular the device, the control unit, and/or the user interface 30, can be supplied with energy. The power plug may be provided on a rear side of the apparatus 1 and/or on the housing 20 or the further housing part 40.

The apparatus 1 further comprises a chaffs collector 50 for collecting the chaffs of the coffee beans, which are roasted by the chamber 10. The chaffs collector 50 comprises a compartment 51, in which the chaffs are collected and prevented from returning to the chamber 10. For example, the chaffs collector 50 may comprise an inlet, which allows only a unidirectional flow of the chaffs so that the chaffs are collected by the chaffs collector 50; thus, the inlet may allow a flow of the chaffs 50 into the compartment 51, but prevent a flow of the chaffs out of the compartment 51, in particular towards the chamber 10. In order to provide a particularly good collection of the chaffs by the chaffs collector 50, the chaffs collector 50 and the (current of air generating) device can be accordingly arranged to one another. For example, the device can be arranged such that the current of air, which is generated by the device, drives the chaffs of the coffee beans towards the chaffs collector 50, such that (in the closed position of the chaffs collector 50, see below) the chaffs are collected by the chaffs collector 50.

The chaffs collector 50 is designed to selectively open the chaffs collector 50 or, if present, the compartment 51 in order to throw away or otherwise use the collected chaffs. The chaffs collector 50 is detachably arranged, so that the chaffs collector 50 can be detached from the apparatus 1, e.g. in order to easily throw away the chaffs. For example, the chaffs collector 50 is detachably mounted to the housing 20 (for example on the rear side of the housing 20), e.g. by an accordingly designed joint. The chaffs collector 50 may form the top of the apparatus 1 and/or is arranged at the top 22 of the housing 20.

The chaffs collector 50 is movably arranged with respect to a specific movement axis in order to be moved between a closed and an open position, i.e. into the closed position or into the open position. The specific movement axis is preferably a movement axis, which is fixed with respect to the apparatus 1. A "fixed movement axis" is to be understood such that the position and orientation of the movement axis is fixed with respect to the apparatus 1, in particular fixed with respect to the housing 20 and/or the further housing part 40.

In the closed position, the chaffs collector 50 covers the opening 12 of the chamber 10. In this position, roasting of the coffee beans inside of the chamber 10 can thus be carried out. That is, in the closed position, the chaffs collector 50 covers the opening 12 such that accessing the chamber 10 via the opening 12 is not possible.

In the closed position, the chaffs collector 50 is preferably flush with the housing 20. As such, the chaffs collector 50 may form together with the housing 20 a geometrical form, which is - disregarding a possible (sealed) gap between the collector 50 and the housing 20 - continuously formed from the housing 20 to the chaffs collector 50. For example, the chaffs collector 50 and the housing 20 together form a substantially symmetrical form in the closed position, such as a substantially cylindrical or (truncated) conical form. The chaffs collector 50 is therefore preferably correspondingly formed to the housing 20, for example with a round form having a diameter, which corresponds to the diameter of the cross-section of the housing 20, which comprises the top 22. The chaffs collector 50 may have a substantially cylindrical form.

In the open position, the chaffs collector 50 does not cover the opening 12 of the chamber 10. Thus, the chamber 10 is accessible (for a human hand) via the opening 12 for removing coffee beans from the chamber 10, and preferably also for inserting coffee beans into the chamber 10. In the open position, the chamber 10 is therefore accessible along the before mentioned accessing direction, which is defined by the opening 12. In the open position, the chaffs collector 50 is thus moved away from a user side of the apparatus 1, in particular towards a rear side of the apparatus 1, which is opposite to the user side of the apparatus 1. The user side is typically the side of the apparatus 1, which comprises the user interface 30 and/or which is directed towards the user operating the apparatus 1. As such, the chaffs collector 50 is in a position, in which the user of the apparatus 1 can easily access and focus on the chamber 10, which receives the (roasted) coffee beans. In the open position, there is also not the risk that the user is burned because of the heated chaffs collector 50. In the open position, the opening 12 is preferably completely uncovered. That is, when viewed in a top plan view of the apparatus 1 (i.e. in the vertical direction or in the accessing direction), the opening 12 and the chaffs collector 50 preferably do not overlap.

As shown in figures 1 and 2, the movement axis is a rotational movement axis. Thereby, a rotational movement about the movement axis moves the chaffs collector 50 between the closed and the open position. The chaffs collector 50 may be mounted to the housing 20 and/or the further housing part 40 in order to be movably arranged with respect to the movement axis. The movement axis is defined by a joint or hinge 60. For example, the joint 60 comprises a first joint element (e.g. on the side of the chaffs collector 50) and a second joint element (e.g. on the side of the housing 20 or housing part 40), which are connected to each other such that the joint elements are relatively movable to each other with respect to the movement axis in order to thus provide the specific movement axis.

The invention is, however, not limited to a rotational movement axis as the movement axis. For example, additionally or alternatively, the movement axis is a linear movement axis so that a linear movement along this movement axis moves the chaffs collector 50 between the closed position and open position. As such, the joint 60 provides a sliding movement, e.g. by connecting a first joint element to the second joint element such that one of the joint elements can slide with respect to or in the respective other joint element.

In the preferred embodiment shown in figures 1 and 2, the chaffs collector 50 is movably arranged with respect to only one specific movement axis. As such, the joint 60 preferably provides only one degree of freedom. The chaffs collector 50 can therefore be brought into the open position or closed position with a single movement with respect to the movement axis, which thus particularly improves the ease of use of the apparatus 1. The invention is, however, not limited to have the chaffs collector 50 to be movably arranged with respect to only one specific movement axis. The chaffs collector 50 may be also movably arranged with respect to more than one specific movement axis, for example such that the chaffs collector 50 is first moved with respect to a first movement axis and, subsequently, moved with respect to a second movement axis in order to be moved into the open or closed position. These movement axes defines the same manner of movement (e.g. rotational or linear) or defines different manners of movement (e.g. one for rotational movement and one for linear movement).

The apparatus 1 comprises a locking mechanism 70, which is adapted to selectively lock or unlock the chaffs collector 50 with respect to the chamber 10, preferably with respect to the housing 20 and/or receptacle 14. If the below described receiving element 52 for receiving the chaffs collector 50 is present, the locking mechanism 70 is adapted to selectively lock or unlock the receiving element 52 with respect to the chamber 10; the explanations of the locking mechanism 70 with respect to the chaffs collector 50 then apply analogously to the locking mechanism 70 for locking or unlocking the receiving element 52 with respect to the chamber 10.

When the chaffs collector 50 is locked with respect to the chamber 10, the chaffs collector 50 is prevented from moving from the closed position into the open position.

In order to lock the chaffs collector 50 with respect to the chamber 10, the locking mechanism 70 may be adapted to cooperate with a fixed part of the apparatus 1, e.g. with the housing 20 and/or the receptacle 14 and/or the opening 13; thus, the chaffs collector 50 can be securely locked with respect to the chamber 10. For example, the locking mechanism 70 comprises a locking part, which is provided on the side of or on the chaffs collector 50, wherein the locking part is adapted to cooperate with a correspondingly formed part of said fixed part, e.g. by engaging each other, in order to be or remain locked with respect to the chamber 10. The locking mechanism 70 comprises an operating element 72 (e.g. a button or a touch sensitive element), which is adapted to unlock the locking mechanism 70, i.e. to unlock the chaffs collector 50 with respect to the chamber 10. The operating element 72 may be provided on the side of the chaffs collector 50 or on the side of the chamber 10. The operating element 72 may be arranged on the joint 60, on the receptacle 14, or on the housing 20.

The chaffs collector 50 is arranged to automatically move into an intermediate position, when the locking mechanism 70 is operated to unlock the chaffs collector 50 with respect to the chamber 10. In the intermediate position, the opening 12 is less covered by the chaffs collector 50 than in the closed position. In the intermediate position, the opening 12 is preferably more covered by the chaffs collector 50 than in the open position. That is, in the intermediate position, the opening 12 and the chaffs collector 50 partially overlap. Preferably, in the intermediate position the chaffs collector 50, e.g. a side edge of the chaffs collector 50, and the opening 12, e.g. a (circumferential) side edge of the opening 12, form a gap, such as a gap having only a few millimeters.

For automatically moving the chaffs collector 50 from the closed position into the intermediate position, the apparatus 1, e.g. the chaffs collector 50, the housing 20, and/or the joint 60, may comprise an elastic element such as a (weak) spring; i.e. the chaffs collector 50 may be spring loaded. The elastic element is provided such that in the closed position the elastic element is biased to move the chaffs collector 50 into the intermediate position. By unlocking the locking mechanism 70, the elastic element thus moves the chaffs collector 50 into the intermediate position by the elastic restoring force of the elastic element. Once having reached the intermediate position, the user of the apparatus 1 can then, e.g. manually, move the chaffs collector 50 further into the open position.

For locking the chaffs collector 50 with respect to the chamber 10, the user may simply manually move the chaffs collector 50 into the closed position. When the chaffs collector 50 arrives in the closed position, the locking mechanism 70 then automatically or manually locks the chaffs collector 50 with respect to the chamber 10, e.g. by a biasing element (spring, etc.), which is biased to bring the locking mechanism 70 into the locked position, when the chaffs collector 50 is in the closed position.

As shown in figures 1 and 2, the movement axis extends in a vertical direction, and the opening 12 is arranged so that the chamber 10 can be accessed also along this vertical direction. That is, the movement axis of the chaffs collector 50 is substantially parallel to the accessing direction of the chamber 10. The chaffs collector 50 can thus be moved in a plane, which is substantially parallel to the opening 12 (e.g. a plane, in which the opening 12 extents) and/or a surface, on which the apparatus 1 is arranged, in order to move the chaffs collector 50 between the open position and the closed position. The apparatus 1 has therefore, both in the open position and in the closed position, (substantially) the same height, in particular differing in only few millimeters. In the intermediate position, the apparatus 1 has almost the same height as in the open position and/or closed position, e.g. differing in only few millimeters. Said height is measured in the vertical direction, when the apparatus 1 is arranged to be operated, i.e. in particular for roasting coffee beans, for example when the opening 12 is arranged to access the chamber 10 along the vertical direction. The height may thus be measured from the surface, on which the apparatus 1 is arranged.

As can be seen in figures 1 and 2, the apparatus 1 or chaffs collector 50 comprises a receiving element 52, which is adapted to receive the chaffs collector 50, preferably such that the chaffs collector 50 is in a defined position and/or orientation with respect to the receiving element 52. Therefore, the chaffs collector 50 is arranged to be detachably provided with respect to the receiving element 52. For example, the receiving element 52 comprises a section 53, which is formed to receive the chaffs collector 50 such that the chaffs collector 50 is in the defined position and/or orientation. The section 53 may be correspondingly or complementary formed to a section or part of the chaffs collector 50, such as complementary formed to the handle of the chaffs collector 50. The section 53 may be formed as a recess in the receiving element 52. The receiving element 52 may be moveably arranged in order to effect that the chaffs collector 50 is moveably arranged with respect to the movement axis in order to move between the closed position and the open position. For example, the receiving element 52 comprises the joint 60 or at least part of the joint 60, such a one of the joint elements.

In other embodiments the movement axis may also extend differently, such as in a horizontal direction. As such, the movement axis is substantially perpendicular to the accessing direction of the chamber 10. Thus, an angle between the chaffs collector 50 and the opening 12 (e.g. a plane, in which the opening 12 extents) and/or the surface, on which the apparatus is arranged, varies, when the chaffs collector 50 is moved between the open position at the closed position. More specifically, said angle is substantially 0° in the closed position, wherein said angle is substantially 90°, when the chaffs collector 50 is in the open position. As such, the apparatus 1 has, in the open position, a higher height than in the closed position.

The receptacle 14 is arranged such that by detaching the receptacle 14 from the apparatus 1, e.g. from the housing 20, the chaffs collector 50 can be moved or pushed into the open position. As such, the user does not need to directly touch the chaffs collector 50 in order to move the chaffs collector 50 into the open position. For example, by moving the receptacle 14 along the vertical direction, the receptacle 14 comes into (mechanical) contact with the chaffs collector 50 to thereby move the chaffs collector 50 into the open position. For example, the flange 15 and/or a part of the handle 16, e.g. a part connecting the handle 16 with the chamber 10 and/or flange 15, comes into (mechanical) contact with (a lower side of) the chaffs collector 15, when the receptacle 14 is moved to be detached from the apparatus 1, e.g. from the housing 20. Therefore, with a single (handling) movement of the receptacle 14, for example along the vertical direction, both the receptacle 14 is detached from the apparatus 1 and the chaffs collector 50 is moved into the open position. Therefore, the operation of the machine is significantly simplified.

Additionally or alternatively, the chaffs collector 50 may be moved into the open position and into the closed position by directly acting on the chaffs collector 50. For example, the chaffs collector 50 comprises a handle for handling the chaffs collector 50 to be moved between the closed position and the open position. This handle - as for the optional handle 16 - also is made of a material, which comprises a material with low heat conductivity and/or a material with a lower heat conductivity than other parts of the chaffs collector 50. For example, the material may be or comprise plastic. Therefore, there is not the risk that the user's hand is burned, when touching the handle of the (possibly heated) chaffs collector 50.

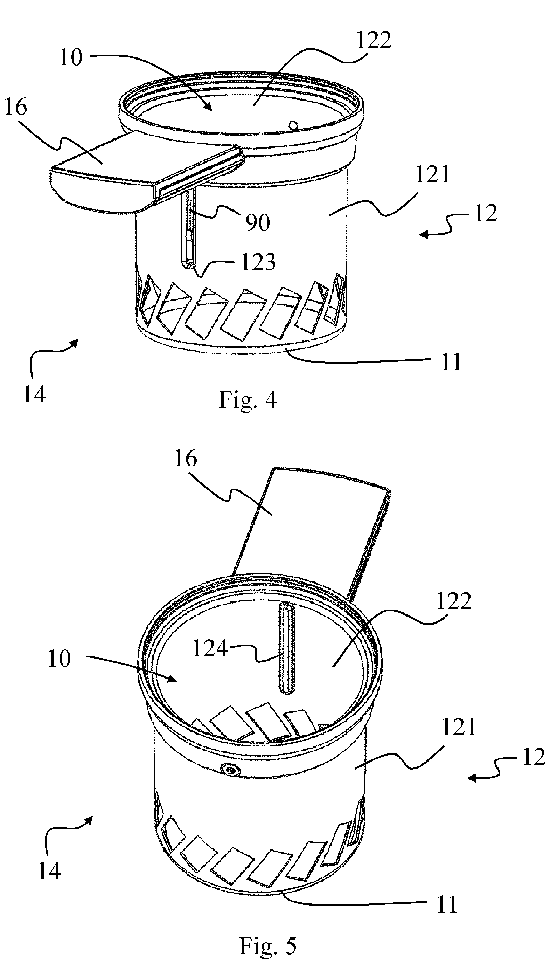

Figures 4 and 5 show the chamber 10 in more detail. As shown in these figures, the sidewall 12 comprises an outer side 121, which is oriented to face away from the chamber 10, i.e. away from the inside of the chamber 10, in which the coffee beans are received. The outer side 121 is therefore the side of the sidewall 12, which cannot be in direct contact with the coffee beans received in the chamber 10. Accordingly, the sidewall 12 also comprises an inner side 122, wherein the inner side 122 is oriented to face to the inside of the chamber 10. The inner side 122 is therefore the side of the sidewall 12, which can be in direct contact with the coffee beans received in the chamber 10. In other words, the sidewall 12 comprises a front side and a backside, wherein the front side is the outer side 121, and wherein the backside is the inner side 122.

According to the invention, the apparatus 1 comprises a temperature sensor 90. The temperature sensor 90 is provided (or arranged) at (or on) the outer side 121 of the sidewall 12. Therefore, the temperature sensor 90 is in particular not arranged in the inside of the chamber 10, but outside the chamber 10. The temperature sensor 90 is configured to sense (i.e. measure) a temperature inside of the chamber 10. Therefore, when the coffee beans are received in chamber 10 for roasting, the temperature sensor 90 can measure (i.e. sense) the temperature of the coffee beans. As such, the temperature sensor 90 is not required to come into direct contact with the coffee beans in order to measure the temperature of the coffee beans. Thus, the temperature of the coffee beans is sensed indirectly, namely by way of the sidewall 12. Since the sidewall 12 usually has a relatively thin wall thickness, the effect of the sidewall 12 on the measurement of the temperature by the temperature sensor 90 is not significant or at least controlled. Therefore, the sidewall 12 provides a protection for the temperature sensor 90 in order to prevent smoke or dirt, in particular resulting from the by-products of the coffee roasting (coffee chaffs, dust, etc.), from accumulating on the temperature sensor 90. A drift of the temperature measured by the temperature sensor 90 is therefore very easily avoided, in particular without the need of encapsulating or complexly housing the temperature sensor 90.

In order to efficiently sense, with the temperature sensor 90, the temperature inside of the chamber 10, the chamber 10 comprises a thermal grease (such as a heat paste) for increasing the heat transfer from the inside of the chamber 10 to the temperature sensor 90. For example, the thermal grease is applied, preferably only, around the temperature sensor 90 and/or between the temperature sensor 90 and the outer side 121 of the sidewall 12. In other examples, the chamber 10 does not comprise the thermal grease.

The temperature sensor 90 is not limited to a specific arrangement or position as long as the temperature sensor 90 is arranged on the outer side 121 of the sidewall 12. Preferably, the temperature sensor 90 is arranged in close proximity and/or opposite to the coffee beans ("coffee bed"), which are received in the chamber 10. For example, the chamber 10 has a height up to which the chamber 10 can receive the coffee beans in the chamber 10. This height is below the opening 13 and/or the flange 15. Hence, between the height on the one side and the opening 13 and/or flange 15 on the other side may be a space, which is not dedicated for receiving coffee beans. Having this height, the temperature sensor 90 is arranged at or below this height in order to precisely sense the temperature of the coffee beans. The temperature sensor 90 may be also arranged slightly above the height.

With respect to the handle 16 of the receptacle 14, the temperature sensor 90 is arranged such that handle 16 at least in part covers the temperature sensor 90 when viewed along a specific viewing direction. For example, in a plan view (i.e. top view) of the receptacle 14, i.e. when viewed along the vertical direction (such as long the accessing direction of the opening 13), the handle 16 covers the temperature sensor 90. Additionally or alternatively, the handle 16 may also cover the temperature sensor 90, when viewed in one or more further viewing directions. For example, when viewed in a side view of the receptacle 14 (such as when viewed in the horizontal direction) the handle 16 at least in part and preferably fully covers the temperature sensor 90. As shown in figures 4 and 5, the handle 16 and the temperature sensor 90 are arranged in a same (vertical) plane.

The outer side 121 of the sidewall 12 comprises a recess (a dedicated hollow section) 123, wherein the temperature sensor 90 is at least in part and preferably fully arranged in the recess 123. The recess 123 therefore receives and/or accommodates the temperature sensor 90. As such, the recess 123 serves as a protection for the temperature sensor 90. Further, the recess 123 facilitates that the temperature sensor 90 can be brought closer to the inside of the chamber 10 and, thus, closer to the coffee beans received in the chamber 10. The recess 123 is preferably correspondingly or complementary formed to the temperature sensor 90. The recess 123 extends longitudinally and/or along the vertical direction. The recess 123 is formed such that when the temperature sensor 90 is arranged in the recess 123, the temperature sensor 90 at least in part does not extent out of the recess 123. Therefore, the temperature sensor 90 can be very effectively arranged. Therefore, the temperature sensor 90 is arranged such that the temperature sensor 90 does not protrude from the outer side 121. As such, it is prevented, in particular during attaching and detaching the receptacle 14 to respectively from the apparatus 1, that the temperature sensor 90 interferes with other parts of the apparatus 1, such as with parts for receiving the chamber 10 respectively the receptacle 14.

As shown in figure 5, the recess 123 is arranged to form a protrusion 124 on the inner side 122 of the sidewall 12. By forming the recess 123 in the sidewall 12, e.g. by means of a dedicated forming process, the sidewall 12 protrudes into the inside of the chamber 10, thereby forming the protrusion 124. The step of forming the recess 123 and, thus, the protrusion 124 may be an embossing step. The recess 123 thus is formed by an embossing in the sidewall 12. The recess 123 may, however, also be formed as an embossing in the sidewall 12 without necessarily requiring the protrusion 124. The protrusion 124 is arranged to come into direct contact with the coffee beans received in the chamber 10. The protrusion 124 therefore is used as a deflection and/or obstruction element for the coffee beans, which are moving, i.e. agitating, in the inside of the chamber 10 by the current of air generated by the device 80. The deflecting and/or obstructing function of the protrusion 124 therefore adds an agitation effect to the coffee beans so that the coffee beans are, due to the deflection/obstruction, more agitated, compared to a design without the protrusion 124. This increased agitation of the coffee beans in the chamber 10 improves the roasting of the coffee beans inside of the chamber 10. More specifically, a coffee bean made travel along the inner side 122 and hit on the protrusion 124 in order to be subsequently deflected, such as away from the inner side 122.

The temperature sensor 90 may be used for different functions, in which the signal, transmitted from the temperature sensor 90, is used. For example, the control unit, the user interface 30, a display unit, and/or the device 80 may be functionally connected with the temperature sensor 90. More specifically, the temperature sensor 90 is able to transmit a first signal related to the sensed temperature. The first signal may be used for displaying the sensed temperature, such as on the user interface 30 and/or a display unit. The display unit comprises the user interface 30. Additionally or alternatively, the first signal, transmitted by the temperature sensor 90, may be also used for determining the presence of the chamber 10 respectively receptacle 14 based on the sensed temperature. For example, the non-presence of the chamber 10 may be detected as soon as the before mentioned functional connection of the temperature sensor 90 with specific components of the apparatus 1 is not present.

In particular, the temperature sensor 90 is used in connection with the control unit, such as for roasting of the coffee beans and/or for determining the presence of the chamber 10. For roasting of the coffee beans, the temperature sensor 90 transmits the first signal to the control unit, wherein the control unit controls the device 80 based on this first signal. For example, if the first signal is below a specific target value (target temperature), the control unit accordingly controls the device 80 in order to transmit more heated air into the chamber 10 in order to reach the target value. For determining the presence of the chamber 10, the control unit may be configured to determine the presence of the chamber 10 based on the received first signal. As such, the control unit avoids roasting of the coffee beans by the device 80 upon receipt of no first signal. In this case, the control unit therefore does not activate the device 80 for roasting. The reception of no first signal may be because the temperature sensor 90 is not functionally connected to, i.e. disconnected from, the control unit or a dedicated connector, which is in turn functionally connected to the control unit. Additionally or alternatively, the control unit may be configured to avoid roasting of the coffee beans by the device 80 upon receipt of the first signal exceeding or falling below a defined threshold value or range. The threshold value or range may be or may include the ambient temperature (such as about 20°C).

The control unit, in addition or as an alternative to the control based on the first signal, controls the device 80 for roasting of the coffee beans based on a second signal related to a roasting temperature. As such, the apparatus 1 comprises a further (second) temperature sensor for sensing the roasting temperature and for subsequently transmitting the second signal related to the roasting temperature. The further temperature sensor is arranged such that the responsiveness with respect to the real temperature of the coffee beans is, compared to responsiveness of the (first) temperature sensor, increased. For example, the further temperature sensor is arranged to come into direct contact with the current of air, generated by the device 80, and/or the coffee beans received in the chamber. With respect to the flow of the current of air, which is generated by the device 80 and, thus, flows from the device 80 into the chamber 10, the further temperature sensor is arranged upstream of the chamber 10, such as between the device 80 and the chamber 10.

In a particularly preferred embodiment, only the further temperature sensor is used for controlling the device 80 in order to roast the coffee beans. As such, the temperature sensor 90 is purposely not provided for the control of the device 80. The temperature sensor 90 is therefore only provided for displaying the sensed temperature and/or for determining the presence of the chamber 10. As such, the temperature sensor 90 ensures to reliably provide the sensed temperature of the inside of the chamber 10, i.e. of the coffee beans received in the chamber 10. Therefore, even though the temperature sensor 90 may have a reduced responsiveness compared to the further temperature sensor, the temperature sensor 90 still informs the user of the apparatus 1 about the real temperature of the inside of the chamber 10. This is, in particular, advantageous for maintenance purposes and for more reliably informing about the real temperature of the coffee beans.

Since the temperature sensor 90 measures the temperature of the inside of the chamber 10, in particular of the coffee beans received therein, indirectly by way of the sidewall 12, the measured temperature may not exactly correspond to the real temperature to be measured or may deliver the real temperature with a delay. This is due to the structure of the sidewall 12, which has a thermal inertia, delaying the transmission of the real temperature by the temperature sensor 90. For this reason, the apparatus 1, preferably the control unit, applies a correction factor to the (first signal related to the) temperature sensed by the temperature sensor 90. For example, the correction factor is applied to the sensed temperature such that the corrected temperature is above or below the sensed temperature. Therefore, even though the sidewall 12 falsifies to a specific extent the sensed temperature, this extent may be eliminated or at least reduced by the correction factor. The correction factor depends on the characteristics of the sidewall 12, which contribute to the thermal inertia of the sidewall 12. For example, the correction factor depends on the geometry and/or material characteristics of the sidewall 12.

The temperature sensor 90 is not limited to a specific temperature sensor. In particular, due to the specific arrangement of the temperature sensor, thereby effecting that the temperature sensor is not exposed to wear and/or to dirt due to the contact with the coffee beans or smoke, a complex design (encapsulating, housing, etc.) is not required for the temperature sensor 90. For example, a low-cost temperature sensor can be used as the temperature sensor 90. The temperature sensor 90 may have a reduced dynamic, when compared to the further temperature sensor, since the temperature sensor 90 is preferably not used for control purposes but only for, e.g., a feedback for the user. The temperature sensor 90 is in particular not required to operate in a large temperature range, since the temperature range at the outer side 121 of the sidewall 12 is smaller than the temperature range in the current of air, generated by the device 80. For example, the temperature sensor 90 is an NTC (negative temperature coefficient) sensor.

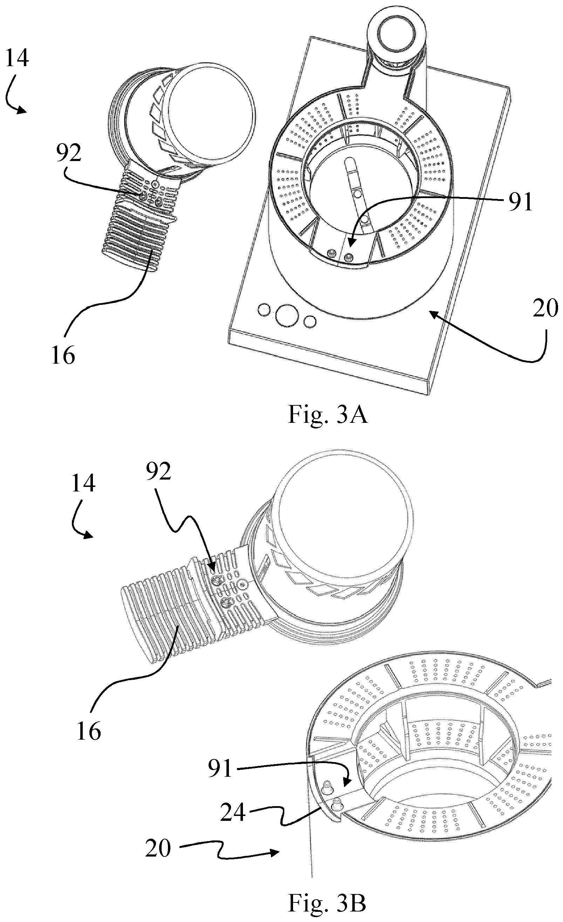

The temperature sensor 90 is fixedly arranged with respect to the chamber 10. Thus, the temperature sensor 90 moves together with the chamber 10 when the chamber is moved, for example when moved for being detached from the apparatus **1.** As can be seen in figures 3A and 3B, the apparatus 1 comprises a (electrical) connector (e.g. in the form of contacting elements 91, 92, such as one or more pins 91 and/or one or more sockets 92), which disconnects from the temperature sensor 90, when the chamber 10 and, thus, the temperature sensor 90 is detached from the apparatus **1.** When the chamber is attached to the apparatus 1 (i.e. for roasting), the temperature sensor 90 may automatically connect to the connector. For example, the apparatus 1 is designed such that when the chamber 10, in particular the receptacle 14, is attached to the apparatus 1, the temperature sensor 90 is automatically brought into a specific position and/or orientation, in which the temperature sensor 90 can connect to the connector. In particular, the cooperation of the handle 16 with the receiving part or section 24 effects this specific position and/or orientation. When the temperature sensor 90 is connected to the connector, the connector thus provides the functional connection between the temperature sensor 90 and the respective parts of the apparatus 1, such as the control unit. The (electrical) connection between the temperature sensor 90 and the connector may be a male-female-connection. For example, one of the temperature sensor 90 and the connector comprises one or more female contact elements 92 (such as arranged on the side of the chamber 10, in particular arranged on the receptacle 14 and/or handle 16, preferably on a side of the handle 16 facing downwards, i.e. towards the device 80), wherein the respective other one of the temperature sensor 90 and the connector comprises one or more male contact elements 91 (such as arranged on a corresponding side of the apparatus 1 or machine body, e.g. fixed with respect to the housing 20 and/or arranged next to or in the section 24), which is adapted to cooperate with the female contact element 92 for providing the connection between the temperature sensor 90 and the connector.

In another embodiment, the temperature sensor 90 may also remain stationary when the chamber 10 is moved, for example when moved for being detached from the apparatus **1.** As such, when the chamber 10 is attached to the apparatus 1 (i.e. for roasting), the outer side 121 is automatically positioned and/or orientated such that the temperature sensor is arranged on the outer side 131 of the sidewall 12, such as in the recess 123. Thus, the temperature sensor 90 always remains fixed with respect to, for example, the housing 20. For example, the apparatus 1 is designed such that when the chamber 10, in particular the receptacle 14, is attached to the apparatus 1, the outer side 121, in particular the recess 123, is automatically brought into a specific position and/or orientation, in which the temperature sensor 90 can be arranged on the outer side 121, such as in the recess 123. In particular, the cooperation of the handle 16 with the receiving part or section 24 effects this specific position and/or orientation.

## Claims

1. An apparatus (1) for roasting coffee beans, the apparatus (1) comprising:
a chamber (10) in which coffee beans can be received for roasting, and
a device (80) for roasting the coffee beans received in the chamber (10),
wherein the chamber (10) is delimited by at least a bottom (11) and a sidewall (12) extending from the bottom (11), wherein the sidewall (12) comprises an outer side (121) oriented to face away from the chamber (10), and wherein a temperature sensor (90) is provided at the outer side (121) of the sidewall (12) for sensing a temperature inside of the chamber (10),
wherein the chamber (10) has a height up to which the chamber (10) can receive the coffee beans in the chamber (10), wherein the temperature sensor (90) is arranged at or below this height, and
wherein the outer side (121) of the sidewall (12) comprises a recess (123), and
wherein the temperature sensor (90) is at least in part arranged in the recess (123).

2. The apparatus (1) according to claim 1, wherein the temperature sensor (90) is arranged such that the temperature sensor (90) does not protrude from the outer side (121) of the sidewall (12).

3. The apparatus (1) according to claim 1 or 2, wherein the recess (123) is arranged to form a protrusion (124) on an inner side (122) of the sidewall (12), wherein the inner side (122) is oriented to face to the inside of the chamber (10).

4. The apparatus (1) according to claim 3, wherein the protrusion (124) is arranged to come into direct contact with the coffee beans received in the chamber (10).

5. The apparatus (1) according to any one of claims 1 to 4, wherein the recess (123) is formed by an embossing in the sidewall (12).

6. The apparatus (1) according to any one of the preceding claims, wherein the temperature sensor (90) is arranged to transmit a first signal related to the sensed temperature for displaying the sensed temperature and/or wherein the temperature sensor (90) is arranged to transmit a first signal related to the sensed temperature for determining the presence of the chamber (10) based on the sensed temperature.

7. The apparatus (1) according to any one of the preceding claims, further comprising a control unit configured to control the device (80) for roasting of the coffee beans, based on the received first signal from the temperature sensor (90) and/or based on a second signal related to a roasting temperature sensed by a further temperature sensor of the apparatus (1), wherein the control unit is configured to determine the presence of the chamber (10) based on the received first signal, and to avoid roasting of the coffee beans by the device (80) upon receipt of no first signal or the first signal exceeding or falling below a defined threshold value or range.

8. The apparatus (1) according to any one of the preceding claims, wherein the apparatus (1), preferably the control unit, is configured to apply a correction factor to the temperature sensed by the temperature sensor (90), wherein the correction factor depends on the geometry and/or material characteristics of the sidewall (12).

9. The apparatus (1) according to any one of the preceding claims, wherein the apparatus (1) further comprises a user interface (31) or a display unit configured to display the sensed temperature based on the transmitted or received first and/or second signal, and/or wherein the apparatus (1) further comprises a communication interface for wireless communication with a user device.

10. The apparatus (1) according to any one of the preceding claims, further comprising a receptacle (14), wherein the receptacle (14) comprises the chamber (10), wherein the receptacle (14) is detachably attached to the apparatus (1).

11. The apparatus (1) according to claim 10, wherein the receptacle (14) comprises a handle (16), wherein the handle (16) is arranged such that at least in a plan view of the receptacle (14) the handle (16) covers the temperature sensor (90).

12. The apparatus (1) according to any one of the preceding claims, wherein the temperature sensor (90) is fixedly arranged with respect to the chamber (10) so that the temperature sensor (90) moves together with the chamber (10) when the chamber (10) is moved or wherein the temperature sensor (90) is arranged to remain stationary when the chamber (10) is moved.

13. The apparatus (1) according to any one of the preceding claims, wherein it further comprises a device (80) for generating a current of air inside of the chamber (10) in order to agitate the coffee beans received in the chamber (10), and/or wherein the device (80) is arranged to generate a heated current of air to roast the coffee beans received in the chamber (10), wherein the device (80) preferably comprises a heating unit for heating up the current of air.

14. The apparatus (1) according to any one of the preceding claims, wherein the apparatus is a home appliance apparatus.

## Patentansprüche

1. Einrichtung (1) zum Rösten von Kaffeebohnen, die Einrichtung (1) umfassend:
eine Kammer (10), in der Kaffeebohnen zum Rösten aufgenommen werden können, und
eine Vorrichtung (80) zum Rösten der Kaffeebohnen, die in der Kammer (10) aufgenommen werden,
wobei die Kammer (10) durch mindestens einen Boden (11) und eine Seitenwand (12), die sich von dem Boden (11) erstreckt, begrenzt ist, wobei die Seitenwand (12) eine Außenseite (121) umfasst, die ausgerichtet ist, um von der Kammer (10) abgewandt zu sein, und wobei ein Temperatursensor (90) an der Außenseite (121) der Seitenwand (12) zum Erfassen einer Temperatur im Inneren der Kammer (10) bereitgestellt ist,
wobei die Kammer (10) eine Höhe aufweist, bis zu der die Kammer (10) die Kaffeebohnen in der Kammer (10) aufnehmen kann, wobei der Temperatursensor (90) auf oder unterhalb dieser Höhe angeordnet ist und
wobei die Außenseite (121) der Seitenwand (12) eine Aussparung (123) umfasst und wobei der Temperatursensor (90) mindestens teilweise in der Aussparung (123) angeordnet ist.

2. Einrichtung (1) nach Anspruch 1, wobei der Temperatursensor (90) derart angeordnet ist, dass der Temperatursensor (90) nicht von der Außenseite (121) der Seitenwand (12) vorspringt.

3. Einrichtung (1) nach Anspruch 1 oder 2, wobei die Aussparung (123) angeordnet ist, um einen Vorsprung (124) an einer Innenseite (122) der Seitenwand (12) auszubilden, wobei die Innenseite (122) ausgerichtet ist, um dem Inneren der Kammer (10) zugewandt zu sein.

4. Einrichtung (1) nach Anspruch 3, wobei der Vorsprung (124) angeordnet ist, um in direkten Kontakt mit den Kaffeebohnen, die in der Kammer (10) aufgenommen werden, zu kommen.

5. Einrichtung (1) nach einem der Ansprüche 1 bis 4, wobei die Aussparung (123) durch eine Prägung in der Seitenwand (12) ausgebildet ist.

6. Einrichtung (1) nach einem der vorstehenden Ansprüche, wobei der Temperatursensor (90) angeordnet ist, um ein erstes Signal, das sich auf die erfasste Temperatur bezieht, zum Anzeigen der erfassten Temperatur zu übertragen, und/oder wobei der Temperatursensor (90) angeordnet ist, um ein erstes Signal, das sich auf die erfasste Temperatur bezieht, zum Bestimmen des Vorhandenseins der Kammer (10) basierend auf der erfassten Temperatur zu übertragen.

7. Einrichtung (1) nach einem der vorstehenden Ansprüche, ferner umfassend eine Steuereinheit, die konfiguriert ist, um die Vorrichtung (80) zum Rösten der Kaffeebohnen zu steuern, basierend auf dem empfangenen ersten Signal von dem Temperatursensor (90) und/oder basierend auf einem zweiten Signal, das sich auf eine Rösttemperatur, die durch einen weiteren Temperatursensor der Einrichtung (1) erfasst wird, bezieht, wobei die Steuereinheit konfiguriert ist, um das Vorhandensein der Kammer (10) basierend auf dem empfangenen ersten Signal zu bestimmen und um das Rösten der Kaffeebohnen durch die Vorrichtung (80) bei einem Empfang keines ersten Signals oder einem Überschreiten oder Unterschreiten, des ersten Signals, eines definierten Schwellenwerts oder -bereichs zu vermeiden.

8. Einrichtung (1) nach einem der vorstehenden Ansprüche, wobei die Einrichtung (1), vorzugsweise die Steuereinheit, konfiguriert ist, um einen Korrekturfaktor auf die Temperatur, die durch den Temperatursensor (90) erfasst wird, anzuwenden, wobei der Korrekturfaktor von der Geometrie und/oder den Materialeigenschaften der Seitenwand (12) abhängt.

9. Einrichtung (1) nach einem der vorstehenden Ansprüche, wobei die Einrichtung (1) ferner eine Benutzerschnittstelle (31) oder eine Anzeigeeinheit umfasst, die konfiguriert ist, um die erfasste Temperatur basierend auf dem übertragenen oder empfangenen ersten und/oder zweiten Signal anzuzeigen, und/oder wobei die Einrichtung (1) ferner eine Kommunikationsschnittstelle für eine drahtlosen Kommunikation mit einer Benutzervorrichtung umfasst.

10. Einrichtung (1) nach einem der vorstehenden Ansprüche, ferner umfassend eine Aufnahme (14), wobei die Aufnahme (14) die Kammer (10) umfasst, wobei die Aufnahme (14) an der Einrichtung (1) abnehmbar angebracht ist.

11. Einrichtung (1) nach Anspruch 10, wobei die Aufnahme (14) einen Griff (16) umfasst, wobei der Griff (16) derart angeordnet ist, dass mindestens in einer Draufsicht auf die Aufnahme (14) der Griff (16) den Temperatursensor (90) abdeckt.

12. Einrichtung (1) nach einem der vorstehenden Ansprüche, wobei der Temperatursensor (90) hinsichtlich der Kammer (10) fest angeordnet ist, sodass sich der Temperatursensor (90) zusammen mit der Kammer (10) bewegt, wenn die Kammer (10) bewegt wird, oder wobei der Temperatursensor (90) angeordnet ist, um stationär zu bleiben, wenn die Kammer (10) bewegt wird.

13. Einrichtung (1) nach einem der vorstehenden Ansprüche, wobei sie ferner eine Vorrichtung (80) zum Erzeugen eines Luftstroms im Inneren der Kammer (10) umfasst, um die Kaffeebohnen, die in der Kammer (10) aufgenommen werden, hin- und herzubewegen, und/oder wobei die Vorrichtung (80) angeordnet ist, um einen erhitzten Luftstrom zu erzeugen, um die Kaffeebohnen, die in der Kammer (10) aufgenommen werden, zu rösten, wobei die Vorrichtung (80) vorzugsweise eine Heizeinheit zum Erhitzen des Luftstroms umfasst.

14. Einrichtung (1) nach einem der vorstehenden Ansprüche, wobei die Einrichtung eine Haushaltsgeräteeinrichtung ist.

## Revendications

1. Appareil (1) permettant de torréfier les grains de café, l'appareil (1) comprenant :
une chambre (10) dans laquelle les grains de café peuvent être reçus pour être torréfiés, et
un dispositif (80) permettant de torréfier les grains de café reçus dans la chambre (10),
dans lequel la chambre (10) est délimitée par au moins un fond (n) et une paroi latérale (12) s'étendant à partir du fond (11), dans lequel la paroi latérale (12) comprend un côté externe (121) orienté pour faire face à l'opposé de la chambre (10), et dans lequel un capteur de température (90) est fourni sur le côté externe (121) de la paroi latérale (12) pour détecter une température à l'intérieur de la chambre (10),
dans lequel la chambre (10) a une hauteur jusqu'à laquelle la chambre (10) peut recevoir les grains de café dans la chambre (10), dans lequel le capteur de température (90) est agencé à cette hauteur ou en dessous, et
dans lequel le côté externe (121) de la paroi latérale (12) comprend un renfoncement (123), et dans lequel le capteur de température (90) est au moins en partie agencé dans le renfoncement (123).

2. Appareil (1) selon la revendication 1, dans lequel le capteur de température (90) est agencé de telle sorte que le capteur de température (90) ne fait pas saillie depuis le côté externe (121) de la paroi latérale (12).

3. Appareil (1) selon la revendication 1 ou 2, dans lequel le renfoncement (123) est agencé pour former une saillie (124) sur un côté interne (122) de la paroi latérale (12), dans lequel le côté interne (122) est orienté pour faire face à l'intérieur de la chambre (10).

4. Appareil (1) selon la revendication 3, dans lequel la saillie (124) est agencée pour entrer en contact direct avec les grains de café reçus dans la chambre (10).

5. Appareil (1) selon l'une quelconque des revendications 1 à 4, dans lequel le renfoncement (123) est formé par un gaufrage dans la paroi latérale (12).

6. Appareil (1) selon l'une quelconque des revendications précédentes, dans lequel le capteur de température (90) est agencé pour transmettre un premier signal lié à la température détectée afin d'afficher la température détectée et/ou dans lequel le capteur de température (90) est agencé pour transmettre un premier signal lié à la température détectée afin de déterminer la présence de la chambre (10) en fonction de la température détectée.

7. Appareil (1) selon l'une quelconque des revendications précédentes, comprenant en outre une unité de commande conçue pour commander le dispositif (80) pour la torréfaction des grains de café, en fonction du premier signal reçu du capteur de température (90) et/ou en fonction d'un second signal lié à une température de torréfaction détectée par un autre capteur de température de l'appareil (1), dans lequel l'unité de commande est conçue pour déterminer la présence de la chambre (10) en fonction du premier signal reçu et pour éviter la torréfaction des grains de café par le dispositif (80) en cas d'absence de premier signal ou si le premier signal dépasse ou tombe en dessous d'une valeur ou plage seuil définie.

8. Appareil (1) selon l'une quelconque des revendications précédentes, dans lequel l'appareil (1), de préférence l'unité de commande, est conçu pour appliquer un facteur de correction à la température détectée par le capteur de température (90), dans lequel le facteur de correction dépend de la géométrie et/ou des caractéristiques du matériau de la paroi latérale (12).

9. Appareil (1) selon l'une quelconque des revendications précédentes, dans lequel l'appareil (1) comprend en outre une interface utilisateur (31) ou une unité d'affichage configurée pour afficher la température détectée en fonction du premier et/ou du second signal transmis ou reçu, et/ou dans lequel l'appareil (1) comprend en outre une interface de communication pour la communication sans fil avec un dispositif utilisateur.

10. Appareil (1) selon l'une quelconque des revendications précédentes, comprenant en outre un réceptacle (14), dans lequel le réceptacle (14) comprend la chambre (10), dans lequel le réceptacle (14) est fixé de manière détachable à l'appareil (1).

11. Appareil (1) selon la revendication 10, dans lequel le réceptacle (14) comprend une poignée (16), dans lequel la poignée (16) est agencée de telle sorte qu'au moins dans une vue en plan du réceptacle (14), la poignée (16) recouvre le capteur de température (90).

12. Appareil (1) selon l'une quelconque des revendications précédentes, dans lequel le capteur de température (90) est agencé de manière fixe par rapport à la chambre (10) de sorte que le capteur de température (90) se déplace conjointement avec la chambre (10) lorsque la chambre (10) est déplacée ou dans lequel le capteur de température (90) est agencé de manière à rester stationnaire lorsque la chambre (10) est déplacée.

13. Appareil (1) selon l'une quelconque des revendications précédentes, dans lequel il comprend en outre un dispositif (80) pour générer un courant d'air à l'intérieur de la chambre (10) afin d'agiter les grains de café reçus dans la chambre (10), et/ou dans lequel le dispositif (80) est agencé pour générer un courant d'air chauffé afin de torréfier les grains de café reçus dans la chambre (10), dans lequel le dispositif (80) comprend de préférence une unité de chauffage pour chauffer le courant d'air.

14. Appareil (1) selon l'une quelconque des revendications précédentes, dans lequel l'appareil est un appareil électroménager.
